Europäisches Patentamt

**European Patent Office**

**Office européen des brevets**

(19)

(11) Numéro de publication: **0 274 921**
**B1**

(12) # FASCICULE DE BREVET EUROPEEN

(45) Date de publication du fascicule du brevet:
**03.10.90**

(51) Int. Cl.⁵: **G01M 11/02**, G02C 13/00

(21) Numéro de dépôt: **87402649.5**

(22) Date de dépôt: **24.11.87**

(54) **Appareil de centrage pour lentille ophtalmique.**

(30) Priorité: **26.11.86  FR 8616464**

(43) Date de publication de la demande:
**20.07.88 Bulletin 88/29**

(45) Mention de la délivrance du brevet:
**03.10.90 Bulletin 90/40**

(84) Etats contractants désignés:
**DE ES FR GB IT**

(56) Documents cités:
**FR-A- 2 188 182**

(73) Titulaire: **ESSILOR INTERNATIONAL, Cie Générale d'Optique, 1 Rue Thomas Edison, Echat 902, F-94028 Créteil Cédex(FR)**

(72) Inventeur: **Joncour, Christian, 121 Rue du Maréchal Giraud, F-94410 Saint-Maurice(FR)**

(74) Mandataire: **CABINET BONNET-THIRION, 95 Boulevard Beaumarchais, F-75003 Paris(FR)**

## Description

La présente invention concerne d'une manière générale le centrage d'une lentille ophtalmique par rapport à un axe de référence et les opérations accompagnant usuellement un tel centrage.

Ainsi qu'on le sait, pour l'adaptation d'une lentille ophtalmique au contour particulier du cercle ou entourage de monture de lunettes qu'elle doit équiper, il est usuel d'en assurer le détourage sur une machine à meuler, et, pour sa mise en place et son maintien sur celle-ci, il est usuel de lui appliquer un bloc de préhension et de maintien, par exemple une simple ventouse, propre à y adhérer de manière débrayable.

Lorsqu'une telle lentille ophtalmique est une lentille correctrice, il importe que son implantation par rapport au cercle ou entourage de monture de lunettes à équiper, et, donc, que son détourage préalable au contour de celui-ci, tienne compte de divers paramètres oculaires, et, notamment, de l'écart pupillaire du sujet concerné.

Il importe donc que, avant sa mise en place sur la machine à meuler propre à assurer son détourage, son centre optique soit très rigoureusement localisé par rapport à un axe de référence, qui peut par exemple très simplement être celui du bloc de préhension et de maintien à lui appliquer.

Mais, par comparaison avec un gabarit à l'image du cercle ou entourage de monture de lunettes à équiper, il convient, conjointement, de s'assurer qu'il y a une compatibilité convenable entre ce cercle ou entourage et la lentille ophtalmique à y mettre en place, le détourage de cette dernière ne devant pas conduire à l'élimination d'une portion substantielle de sa partie correctrice utile.

Il a déjà été proposé des appareils de centrage permettant une telle comparaison.

C'est le cas par example de celui faisant l'objet du brevet français qui, déposé le 1er Juin 1972 sous le No 72 19694, a été publié sous le No 2.188.182.

Cet appareil de centrage comporte, pour ce faire, sur un bâti, une première platine de support, qui est propre à recevoir la lentille ophtalmique à centrer, et qui, translucide, comporte à sa base un écran dépoli, un ensemble de projection qui, disposé au-dessus de ladite première platine de support, est apte à former sur ledit écran dépoli une image d'une telle lentille ophtalmique, une première voie d'observation qui, par une ouverture du bâti, est apte à permettre à un opérateur de voir l'écran dépoli, une deuxième platine de support, qui est apte à recevoir le gabarit auquel doit être comparée la lentille ophtalmique, et une deuxième voie d'observation qui, par la même dite ouverture du bâti, est apte à permettre à l'opérateur de voir ladite deuxième platine de support, lesdites première et deuxième voies d'observation ayant en commun un tronçon émergeant auquel appartient cette ouverture.

Ainsi, l'opérateur a simultanément sous les yeux, sous la forme d'images superposées, la lentille ophtalmique à détourer et le gabarit correspondant au cercle ou entourage de monture de lunettes qu'elle doit équiper, et, après centrage de cette lentille ophtalmique par rapport à l'axe de référence correspondant, il peut contrôler s'il y a effectivement une compatibilité satisfaisante entre elle et ce cercle ou entourage de monture de lunettes.

Mais, en pratique, dans l'appareil de centrage en question, la platine de support destinée à recevoir un gabarit est implantée à l'arrière du bâti de cet appareil, et il s'agit d'un tiroir monté coulissant latéralement par rapport à ce bâti.

Il en résulte divers inconvénients.

Tout d'abord, en raison même de son implantation à l'arrière du bâti, l'accessibilité à la platine de support ainsi constituée d'un tiroir est relativement médiocre, ce qui en rend globalement malaisées les opérations nécessaires à la mise en place d'un gabarit.

En outre, ces opérations sont multiples, puisqu'elles impliquent une extraction du tiroir du bâti, une mise en place du gabarit sur ce tiroir, et une réintroduction de l'ensemble dans le bâti, ce qui est inévitablement générateur d'une perte de temps non négligeable pour l'opérateur.

Enfin, et surtout, le retour en position initiale du tiroir constituant ainsi la platine de support du gabarit se fait de manière mal contrôlée, en sorte qu'il subsiste une certaine incertitude sur la position de ce tiroir, et donc du gabarit, dans l'appareil, lorsque la lentille ophtalmique a détourer est comparée à ce gabarit.

La présente invention a d'une manière générale pour objet une disposition permettant de manière très simple d'éviter ces inconvénients.

De manière plus précise, elle a pour objet un appareil de centrage pour lentille ophtalmique, du genre comportant, sur un bâti, une première platine de support, qui est propre à recevoir une lentille ophtalmique à centrer, et qui, translucide, comporte à sa base un écran dépoli, un ensemble de projection, qui, disposé au-dessus de ladite première platine de support, est apte à former sur ledit écran dépoli une image d'une telle lentille ophtalmique, une première voie d'observation qui, par une ouverture du bâti, est apte à permettre à un opérateur de voir l'écran dépoli, une deuxième platine de support, qui est apte à recevoir un gabarit auquel doit être comparée la lentille ophtalmique, et une deuxième voie d'observation qui, par la même dite ouverture du bâti, est apte à permettre à l'opérateur de voir ladite deuxième platine de support, lesdites première et deuxième voies d'observation ayant en commun un tronçon émergeant auquel appartient ladite ouverture du bâti, cet appareil de centrage étant d'une manière générale caractérisé en ce que la deuxième platine de support, celle destinée à recevoir un gabarit, est disposée à l'avant du bâti, à la faveur d'un évidement de celui-ci qui débouche en façade.

L'accessiblité à cette platine de support est ainsi avantageusement immédiate.

En outre, cette platine de support étant fixe par rapport au bâti, aucune manipulation n'est à lui appliquer pour la mise en place d'un gabarit dans celui-ci, et cette mise en place se fait en toute certitude de manière rigoureuse, ladite platine de support se trouvant par construction correctement implantée dans ce bâti.

Par ailleurs, le bâti de l'appareil suivant l'invention se trouvant ainsi libéré, à l'arrière, du volume nécessaire à l'implantation de la platine de support du gabarit, il est avantageusement possible, si désiré, de rapprocher de manière ergonomique de la verticale l'axe d'observation, c'est-à-dire l'axe de l'ouverture de ce bâti par laquelle se fait l'observation simultanée du gabarit et d'une image de la lentille ophtalmique à détourer.

Ainsi, suivant un développement de l'invention, l'inclinaison de l'axe de l'ouverture du bâti sur la verticale est avantageusement comprise entre 25° et 40°, en étant par exemple voisine de 30°.

Enfin, suivant un autre développement de l'invention, la platine de support apte à recevoir le gabarit comporte, pour réception d'un tel gabarit, un socle, dont, en plan, une dimension suivant une direction au moins est inférieure à celle du gabarit correspondant à cette même direction.

La saisie à la main d'un tel gabarit sur une telle platine de support pour en retirer celui-ci se trouve ainsi avantageusement facilitée.

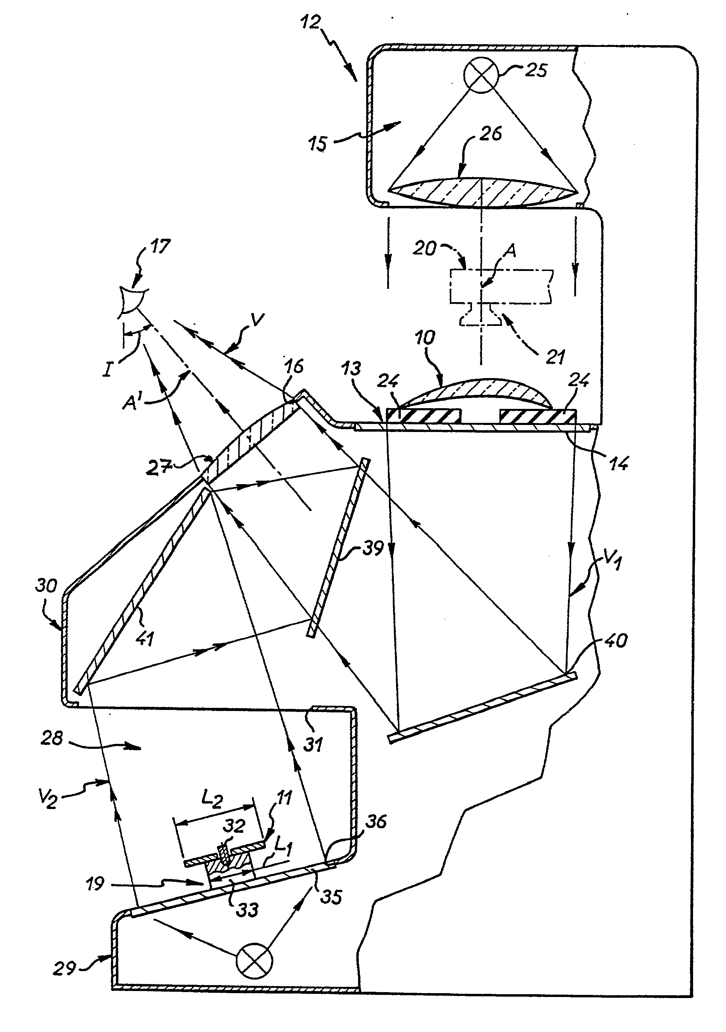

Les caractéristiques et avantages de l'invention ressortiront d'ailleurs de la description qui va suivre, à titre d'exemple, en référence au dessin schématique annexé sur lequel la figure unique est une vue en élévation-coupe d'un appareil de centrage suivant l'invention.

Globalement, et tel que schématisé sur la figure, il s'agit, après centrage d'une lentille ophtalmique 10 par rapport à un axe de référence A, d'en comparer le contour avec celui d'un gabarit 11 qui est à l'image du cercle ou entourage de monture de lunettes que doit équiper cette lentille ophtalmique 10.

De manière connue en soi, l'appareil de centrage mis en oeuvre à cet effet suivant l'invention comporte un bâti 12, et, sur celui-ci, une première platine de support 13, qui est propre à recevoir la lentille ophtalmique 10 à centrer, et qui, translucide, comporte à sa base un écran dépoli 14, en étant par exemple, et tel que représenté, très simplement constituée par elle-même par un tel écran dépoli 14, un ensemble de projection 15, qui, disposé au-dessus de ladite première platine de support 13, est apte à former sur ledit écran dépoli 14 une image d'une telle lentille ophtalmique 10, une première voie d'observation V1, schématisée par des flèches simples sur la figure, qui, par une ouverture 16 du bâti 12, est apte à permettre à un opérateur 17, schématisé par un oeil sur la figure, de voir l'écran dépoli 14, une deuxième platine de support 19, qui est apte à recevoir le gabarit 11 auquel doit être comparée la lentille ophtalmique 10, et une deuxième voie d'observation V2, schématisée par des flèches doubles sur la figure, qui, par la même dite ouverture 16 du bâti 12, est apte à permettre à l'opérateur 17 de voir ladite deuxième platine de support 19, lesdites première et deuxième voies d'observation V1, V2 ayant en commun un tronçon émergeant V, qui, pour l'opérateur 17, forme la voie d'observation proprement dite, et auquel appartient l'ouverture 16 du bâti 10.

Tel que schématisé en traits interrompus sur la figure, l'appareil se complète notamment par un bras 20, qui est monté mobile entre une position escamotée d'attente, non représentée, et une position déployée de service, pour laquelle, tel que représenté, il est interposé entre la platine de support 13 et l'ensemble de projection 15, ce bras 20 étant apte à la pose, sur la lentille ophtalmique 10, d'un bloc de préhension et de maintien 21, une simple ventouse par exemple.

L'axe de référence A, qui est l'axe de l'ensemble de projection 15, et sur lequel s'aligne le bloc de préhension et de maintien 21 lors de sa pose sur la lentille ophtalmique 10, est en pratique schématisé par une croix sur l'écran dépoli 14 formant la platine de support 13.

De manière connue en soi, il est en outre associé à cette platine de support 13 un réticule, non visible sur la figure, qui, sous le contrôle de moyens de commande à la disposition de l'usager, est monté mobile vis-à-vis de l'axe de référence A, transversalement par rapport à celui-ci, et qui porte un certain nombre de repères propres à permettre de prendre en compte les divers paramètres oculaires à prendre en considération, et, notamment, l'écart pupillaire du sujet concerné.

Dans la forme de mise en oeuvre illustrée, la mise en place de la lentille ophtalmique 10 sur la platine de support 13 se fait par l'intermédiaire de tampons élastiques 24, qui, au nombre de trois par exemple, en étant par exemple disposés en Y, sont destinés à amortir l'effort dont est l'objet cette lentille ophtalmique 10 lorsqu'il lui est appliqué le bloc de préhension et de maintien 21.

De manière connue en soi, l'ensemble de projection 15 comporte, quant à lui, une source lumineuse 25 et un condenseur 26 propre à en fournir un faisceau parallèle.

De manière connue en soi, enfin, une lentille grossissante 27, formant loupe, est disposée dans l'ouverture 16 du bâti 12 par laquelle se fait l'observation de l'ensemble.

Ces diverses dispositions ne relevant pas de la présente invention, elles ne seront pas décrites plus en détail ici.

De même le bâti 12 ne faisant pas, dans son ensemble, l'objet de la présente invention, il ne sera pas décrit dans tous ses détails ici.

Seuls en seront décrits les éléments nécessaires à la compréhension de l'invention.

Suivant l'invention, la platine de support 19, celle destinée à recevoir un gabarit 11, est disposée à l'avant du bâti 12, à la faveur d'un évidement 28 de celui-ci qui débouche en façade, c'est-à-dire du côté de l'opérateur 17.

En pratique, vue de l'avant du bâti 12, cette platine de support 19 est disposée en-deçà de l'axe de l'ensemble de projection 15, c'est-à-dire de l'axe de référence A.

Dans la forme de réalisation représentée, elle est disposée, en étant légèrement inclinée, à la partie supérieure d'une partie de semelle 29 du bâti 12, en étant surplombée par une partie intermédiaire 30 de ce bâti 12 qui s'étend en porte-à-faux, en console, par rapport à la partie courante de celui-ci, en présentant, à sa partie supérieure, sensiblement à niveau avec la platine de support 13, l'ouverture 16 correspondant au tronçon V commun aux deux voies d'observation V1, V2, et, à sa partie inférieure, une ouverture 31, qui, ainsi qu'il apparaîtra ci-après, appartient à la voie d'observation V2.

Dans la forme de réalisation représentée, la platine de support 19 comporte, directement en saillie, au moins un goujon 32 sur lequel doit être engagé le gabarit 11.

En pratique, deux de tels goujons 32 sont prévus, parallèlement l'un à l'autre, à distance l'un de l'autre, pour un maintien convenable du gabarit 11.

Seul l'un de ces goujons 32 est visible sur la figure.

Dans la forme de réalisation représentée, la platine de support 19 comporte, pour réception du gabarit 11, un socle 33, qui porte en saillie les goujons 32, et dont, en plan, une dimension suivant une direction au moins du plan est inférieure à celle du gabarit 11 correspondant à cette même direction.

Par exemple, et tel que représenté, la largeur L1 de ce socle 33 est inférieure à celle L2 correspondante du gabarit 11.

En pratique, le socle 33 appartenant ainsi à la platine de support 19 est porté par une semelle translucide 35, qui occulte une ouverture 36 du bâti 12, et sous laquelle ce bâti 12 contient une source lumineuse 36 propre à l'éclairage du gabarit 11.

Outre l'ouverture 16 du bâti 12, les deux voies d'observation V1, V2 ont en commun une lame semi-transparente 39 que traverse la voie d'observation V1, celle correspondant à l'observation de la lentille ophtalmique 10 à centrer, tandis que la voie d'observation V2, celle correspondant à l'observation du gabarit 11 est, par réflexion, repliée en direction de ladite ouverture 16 du bâti 12 par ladite lame semi-transparente 39.

Entre la platine de support 13 et la lame semi-transparente 39, la voie d'observation V1 comporte un réflecteur 40, et, de même, entre la platine de support 19 et cette lame semi-transparente 39, la voie d'observation V2 comporte un réflecteur 41, lesdits réflecteurs 40, 41 étant chacun respectivement disposés de part et d'autre de ladite lame semi-transparente 39, en étant convenablement orientés par rapport à celle-ci.

De préférence, et tel que représenté, l'axe A' de l'ouverture 16 du bâti 12, qui forme l'axe du tronçon V commun aux voies d'observation V1, V2, est incliné sur la verticale, et son inclinaison I correspondante est comprise entre 25 et 40°, en étant de préférence voisine de 30°.

Une telle inclinaison correspond avantageusement à un certain confort ergonomique pour l'opérateur 17.

Bien entendu, l'axe de référence A est conjointement vertical, la platine de support 13 destinée à recevoir la lentille ophtalmique 10 à centrer étant, elle, horizontale.

L'inclinaison de la lame semi-transparente 39 et celle des réflecteurs 40, 41 sont dès lors établies en conséquence.

Bien entendu, cette lame semi-transparente 39 et ces réflecteurs 40, 41 sont convenablement assujettis au bâti 12.

Préalablement à l'intervention du bras 20 portant le bloc de préhension et de maintien 21 à poser, le réticule associé à l'écran dépoli 14 constituant la platine de support 13 destinée à recevoir cette lentille ophtalmique 10 est convenablement positionné par rapport à la croix qui matérialise sur ledit écran dépoli 14 l'axe de référence A, en tenant compte, pour ce faire, des divers paramètres oculaires à respecter.

La lentille ophtalmique 10 est à son tour posée sur la platine de support 13, en la positionnant convenablement par rapport aux repères portés par le réticule, et en tenant compte, pour ce faire, de ses propres repères.

Eventuellement, elle est en outre convenablement orientée, par rotation autour de son axe.

La lentille ophtalmique 10 étant ainsi centrée par rapport à l'axe de référence A, il est procédé à la comparaison de son contour avec celui du gabarit 11.

Ainsi qu'on le notera, la mise en place du gabarit 11 se fait aisément, par l'avant même du bâti 12 et, la platine de support 19 étant fixe par rapport à celui-ci, cette mise en place se fait avantageusement de manière rigoureuse par rapport à celui-ci, sans aucune manipulation ou déplacement de la platine de support 19.

Il suffit ensuite de faire intervenir le bras 20 propre à la pose du bloc de préhension et de maintien 21 à fixer.

## Revendications

1. Appareil de centrage pour lentille ophtalmique, du genre comportant, sur un bâti (12), une première platine de support (13), qui est propre à recevoir une lentille ophtalmique (10) à centrer, et qui, translucide, comporte à sa base un écran dépoli (14), un ensemble de projection (15), qui, disposé au-dessus de ladite première platine de support (13), est apte à former sur ledit écran dépoli (14) une image d'une telle lentille ophtalmique (10), une première voie d'observation (V1) qui, par une ouverture (16) du bâti (12), est apte à permettre à un opérateur (17) de voir l'écran dépoli (14), une deuxième platine de support (19), qui est apte à recevoir un gabarit (11) auquel doit être comparée la lentille ophtalmique (10), et une deuxième voie d'observation (V2), qui, par la même dite ouverture (16) du bâti, est apte à permettre à l'opérateur (17) de voir ladite deuxième platine de support (19), lesdites première et deuxième voies d'observation (V1, V2) ayant en commun un tronçon émergeant (V) auquel appartient ladite ouverture (16) du bâti (12), caractérisé en ce que la deuxième platine de support (19), celle destinée à recevoir un gabarit (11), est disposée à l'avant du bâti (12), à la faveur d'un évidement (28) de celui-ci qui débouche en façade.

2. Appareil de centrage suivant la revendication 1, caratérisé en ce que, vue de l'avant du bâti (12), la deuxième platine de support (19) est disposée en-deçà de l'axe (A) de l'ensemble de projection.

3. Appareil de centrage suivant l'une quelconque des revendications 1, 2, caractérisé en ce que la deuxième platine de support (19) comporte directement en saillie au moins un goujon (32) sur lequel doit être engagé un gabarit (11).

4. Appareil de centrage suivant l'une quelconque des revendications 1 à 3, caractérisé en ce que, les deux voies d'observation (V1, V2) ayant en commun, outre une ouverture (16) du bâti (12), une lame semi-transparente (39), celle (V1) correspondant à l'observation de la lentille ophtalmique (10) à centrer traverse ladite lame semi-transparente (39), tandis que celle (V2) correspondant à l'observation du gabarit (11) est repliée par celle-ci.

5. Appareil de centrage suivant la revendication 4, caractérisé en ce que la voie d'observation (V2) correspondant à l'observation du gabarit (11) comporte un réflecteur (41) entre la platine de support (19) correspondante et la lame semi-transparente (39).

6. Appareil de centrage suivant l'une quelconque des revendications 1 à 5, caractérisé en ce que, l'axe (A') de l'ouverture (16) du bâti (12) étant incliné sur la verticale, son inclinaison est comprise entre 25 et 40° en étant de préférence voisine de 30°.

7. Appareil de centrage suivant l'une quelconque des revendications 1 à 6, caractérisé en ce que la platine de support (19) apte à recevoir un gabarit (11) comporte, pour réception d'un tel gabarit (11), un socle (33), dont, en plan, une dimension (L1) suivant une direction au moins est inférieure à celle (L2) du gabarit (11) correspondant à cette même direction.

**Claims**

1. A centering apparatus for an ophthalmic lens, of the type comprising, on a frame (12), a first support plate (13) which is capable of receiving an ophthalmic lens (10) to be centered and which, being translucent, comprises at its base a frosted screen (14), a projection assembly (15) which, disposed above said first support plate (13), is capable of forming on said frosted screen (14) an image of such an ophthalmic lens (10), a first observation path (VI) which, by way of an opening (16) in the frame (12), is capable of permitting an operator (17) to view the frosted screen (14), a second support plate (19) which is capable of receiving a template (11) to which the ophthalmic lens (10) is to be compared, and a second observation path (V2) which, by way of the same said opening (16) in the frame, is capable of permitting the operator (17) to view said second support plate (19), said first and second observation paths (V1, V2) having in common an emergent section (V) to which said opening (16) of the frame (12) belongs, characterised in that the second support plate (19), being that which is intended to receive a template (11), is disposed at the front of the frame (12) by virtue of a recess (28) therein which opens at the front thereof.

2. A centering apparatus according to claim 1 characterised in that, seen from the front of the frame (12), the second support plate (19) is disposed on the nearside of the axis (A) of the projection assembly.

3. A centering apparatus according to either one of claims 1 and 2 characterised in that the second support plate (19) directly comprises in projecting relationship at least one peg (32) on to which a template (11) is to be fitted.

4. A centering apparatus according to any one of claims 1 to 3 characterised in that, the two observation paths (V1, V2) having a semitransparent plate (39) in common, besides an opening (16) in the frame (12), that path (V1) which corresponds to observation of the ophthalmic lens (10) to be centered passes through said semi-transparent plate (39) while that path (V2) corresponding to observation of the template (11) is turned back by said semi-transparent plate.

5. A centering apparatus according to claim 4 characterised in that the observation pat (V2) corresponding to observation of the template (11) comprises a reflector (41) between the corresponding support plate (19) and the semi-transparent plate (39).

6. A centering apparatus according to any one of claims 1 to 5 characterised in that, the axis (A) of the opening (16) of the frame (12) being inclined to the vertical, its inclination is between 25 and 40°, preferably being close to 30°.

7. A centering apparatus according to any one of claims 1 to 6 characterised in that the support plate (19) for receiving a template (11) comprises, for receiving such a template (11), a base (33) of which in plan a dimension (L1) in one direction at least is less than the dimension (L2) of the template (11) corresponding to said same direction.

**Patentansprüche**

1. Zentriergerät für eine ophthalmische Linse bzw. ein Brillenglas mit einer ersten Tragplatte (13) auf einem Gestell (12), die eine zu zentrierende Brillenlinse (10) aufnehmen kann und, lichtdurchlässig, an ihrer Basis eine Mattscheibe (14) umfaßt, einer Projektionsanordnung (15), die über der ersten Tragplatte (13) angeordnet und geeignet ist, auf der Mattscheibe (14) ein Bild einer solchen Brillenlinse (10) zu formen bzw. abzubilden, einer ersten Beobachtungsstrecke (V1), die es durch eine Öffnung (16) des Gestelles (12) einer Bedienungsperson (17) gestattet, die Mattscheibe (14) zu beobachten, einer zweiten Tragplatte (19), die ein Bezugsmodell (11) aufnehmen kann, mit welchem das Brillenglas (10) zu vergleichen ist, und einer zweiten Beobachtungsstrecke (V2), die es durch dieselbe genannte Öffnung (16) des Gestells der Bedienungsperson (17) gestattet, die zweite Tragplatte (19) zu beobachten, wobei die erste und zweite Beobachtungsstrecke (V1, V2) einen vortretenden Abschnitt (V) gemeinsam haben, zu welchem die Öffnung (16) des Gestells (12) gehört, dadurch gekennzeichnet, daß die zweite Tragplatte (19), die zur Aufnahme eines Bezugsmodells (11) bestimmt ist, vor dem Gestell (12) mittels einer bzw. unter dem Schutz einer Ausnehmung (28) von diesem angeordnet ist, die sich nach vorne öffnet.

2. Zentriergerät für eine ophthalmische Linse nach Anspruch 1, dadurch gekennzeichnet, daß von der Vorderseite des Gestells (12) gesehen die zweite Tragplatte (19) diesseits der Achse (A) der Projektionsanordnung angeordnet ist.

3. Zentriergerät für eine ophthalmische Linse nach Anspruch 1 oder 2, dadurch gekennzeichnet, daß die zweite Tragplatte (19) direkt vorspringend zumindest einen Stift (32) umfaßt, auf welchem ein Bezugsmodell (11) in Eingriff gebracht wird.

4. Zentriergerät für eine ophthalmische Linse nach Anspruch 1 oder 3, dadurch gekennzeichnet, daß die zwei Beobachtungsstrecken (V1, V2) außer einer Öffnung (16) des Gestells (12) eine halbtransparente Lamelle bzw. Spiegelplatte (39) gemeinsam haben, wobei diejenige (V1), die der Beobachtung des zu zentrierenden Brillenglases (10) zugeordnet ist, die halbtransparente Spiegelplatte (39) durchquert, während diejenige (V2), die der Beobachtung des Bezugsmodells (11) zugeordnet ist, durch diese zurückgeklappt wird.

5. Zentriergerät für eine ophthalmische Linse nach Anspruch 4, dadurch gekennzeichnet, daß die Beobachtungsstrecke (V2), die der Beobachtung des Bezugsmodells (11) zugeordnet ist, einen Reflektor (41) zwischen der entsprechenden Tragplatte (19) und der halbtransparenten Spiegelplatte (39) umfaßt.

6. Zentriergerät für eine ophthalmische Linse nach einem der Ansprüche 1 bis 5, dadurch gekennzeichnet, daß die Achse (A') der Öffnung (16) des Gestells (12), die gegenüber der Vertikalen geneigt ist, eine Neigung zwischen 25 und 40° und bevorzugt im Bereich von 30° aufweist.

7. Zentriergerät für eine ophthalmische Linse nach einem der Ansprüche 1 bis 6, dadurch gekennzeichnet, daß die Tragplatte (19), die zur Aufnahme eines Bezugsmodells (11) geeignet ist, für die Aufnahme eines solchen Bezugsmodells (11) einen Sockel (33) umfaßt, von dem in Draufsicht eine Abmessung (L1) wenigstens entlang einer Richtung geringer ist als diejenige (L2) des Bezugsmodells (11), die derselben Richtung entspricht.

EP 0 274 921 B1